# EUROPÄISCHE PATENTSCHRIFT

(11) **EP 3 428 759 B1**
(45) Veröffentlichungstag und Bekanntmachung des Hinweises auf die Patenterteilung: **02.09.2020**
(21) Anmeldenummer: 18181667.9
(22) Anmeldetag: 04.07.2018
(51) Int. Cl.: G05D 1/02

(54) **VERFAHREN ZUM BETRIEB EINES SICH SELBSTTÄTIG FORTBEWEGENDEN SERVICEGERÄTES**
METHOD FOR OPERATING AN AUTOMATICALLY MOVING SERVICE DEVICE
PROCÉDÉ DE FONCTIONNEMENT D'UN APPAREIL DE SERVICE EN MOUVEMENT DE MANIÈRE AUTOMATIQUE

(30) Priorität: 13.07.2017 DE 102017006621; 03.07.2018 DE 102018116065
(43) Veröffentlichungstag der Anmeldung: 16.01.2019
(73) Patentinhaber: Vorwerk & Co. Interholding GmbH, 42275 Wuppertal (DE)
(72) Erfinder: HILLEN, Lorenz, 42287 Wuppertal (DE)
(74) Vertreter: Müller, Enno

(56) Entgegenhaltungen:
- EP-A1- 3 185 096
- WO-A1-2014/055966
- WO-A1-2015/127954
- WO-A1-2017/037257
- US-A1- 2012 116 588

## Beschreibung

### Gebiet der Technik

Die Erfindung betrifft ein Verfahren zum Betrieb eines sich selbsttätig fortbewegenden Servicegerätes, wobei eine Detektionseinrichtung Hindernisse innerhalb einer Umgebung detektiert, wobei anhand von Detektionsergebnissen der Detektionseinrichtung eine Umgebungskarte der Umgebung erstellt wird und wobei sich das Servicegerät anhand der Umgebungskarte innerhalb der Umgebung fortbewegt, wobei eine Steuereinrichtung des Servicegerätes eine Information über eine räumliche Position einer Basisstation in der Umgebung erhält, wobei ferner ein Rangierbereich zum Annähern, Wenden und/oder Andocken des Servicegerätes an die Basisstation bestimmt wird, und wobei die räumliche Position und der Rangierbereich in der Umgebungskarte gespeichert werden.

### Stand der Technik

Verfahren zum Betrieb von sich selbsttätig fortbewegenden Servicegeräten sind im Stand der Technik bekannt.

Die Veröffentlichungen DE 10 2011 000 536 A1 und DE 10 2008 014 912 A1 zeigen derartige Verfahren beispielsweise im Zusammenhang mit selbsttätig verfahrbaren Reinigungsrobotern zur Abreinigung von Fußböden. Darüber hinaus können diese Verfahren jedoch auch bei anderen Servicegeräten Anwendung finden, beispielsweise bei selbsttätig verfahrbaren Transportrobotern, Rasenmährobotern oder dergleichen. Derartige Servicegeräte sind bevorzugt mit Abstandssensoren ausgestattet, um so beispielsweise eine Kollision mit einem in einem Verfahrweg stehenden Hindernis zu vermeiden. Die Abstandssensoren arbeiten bevorzugt berührungslos, beispielsweise mit Hilfe von Licht- und/oder Ultraschall. Es ist des Weiteren bekannt, den Roboter mit Mitteln zur Rundum-Abstandsmessung zu versehen, beispielsweise in Form eines optischen Triangulationssystems, welches auf einer um eine Vertikalachse rotierenden Plattform oder dergleichen angeordnet ist. Mittels eines solchen Systems können Rundum-Abstandsmessungen zur Orientierung des Servicegerätes innerhalb seiner Umgebung vorgenommen werden, weiter insbesondere im Zuge einer selbsttätig ausgeführten Tätigkeit des Servicegerätes sowie weiter bevorzugt zum Anlegen einer Umgebungskarte der befahrende Umgebung.

Die Detektionsergebnisse des Abstandssensors werden zu einer Umgebungskarte weiterverarbeitet und insbesondere in einem nicht flüchtigen Speicher des Servicegerätes gespeichert, so dass im Zuge eines Reinigungs- und/oder Transportvorganges auf diese Umgebungskarte zum Zwecke der Orientierung zurückgegriffen werden kann.

Des Weiteren ist es bekannt, dass sich das selbsttätig fortbewegende Servicegerät zu einer Basisstation fortbewegen und dort andocken kann, um beispielsweise einen Akkumulator aufzuladen, einen Sauggutbehälter zu leeren oder andere Dienstleistungen an der Basisstation zu erhalten. Zu diesem Zweck nähert sich das Servicegerät der Basisstation über einen Rangierbereich an, welcher - bezogen auf eine Blickrichtung des Servicegerätes - vor dem Andockbereich der Basisstation liegt. Da ein Akkumulator und/oder ein Sauggutbehälter auch in einem Heckbereich des Servicegerätes angeordnet sein kann, ist es im Stand der Technik auch bekannt, dass das Servicegerät in dem Rangierbereich bis zu 180 Grad wendet, um mit dem Geräteheck an die Basisstation anzudocken. Für die Annäherung sowie auch die Richtungsänderung innerhalb des Rangierbereiches benötigt das Servicegerät einen hindernisfreien Raum, um mit einer vorgesehenen Bewegungsfolge an die Basisstation andocken zu können.

Befindet sich innerhalb des Rangierbereiches ein Hindernis, welches das Annähern, Wenden und/oder Andocken des Servicegerätes an die Basisstation verhindert, erkennt das Servicegerät dieses erst, sobald der Annäherungsvorgang innerhalb des Rangierbereiches begonnen hat und eine Detektionseinrichtung des Servicegerätes das Hindernis wahrnimmt. Wenn das Servicegerät nicht an der Basisstation andocken kann, bleibt dieses an der zuletzt erreichten Position stehen. Ein Aufladen eines Akkumulators wird dadurch beispielsweise unmöglich, so dass das Servicegerät sich im ungünstigsten Fall bei entladenem Akkumulator vollständig ausschaltet und eine zuvor gespeicherte Verfahrroute inklusive einer Reinigungshistorie aus einem Arbeitsspeicher des Servicegerätes gelöscht wird.

Die Veröffentlichung WO 2017/037257 A1 offenbart ein System aus einem mobilen Roboter und einer Basisstation für den Roboter. Der Roboter umfasst eine Robotersteuerung zum Identifizieren und Lokalisieren der Basisstation sowie zum Bestimmen einer Andockposition des Roboters an der Basisstation. Der Roboter detektiert unter anderem Objekte in einem definierten Rangierbereich an der Basisstation, wobei vorgeschlagen ist, den Nutzer möglichst frühzeitig über Probleme zu informieren, die das Andocken des Roboters an der Basisstation verhindern. Dazu ist offenbart, dass der Roboter die Detektion einer Störung immer nach Verlassen der Basisstation, also insbesondere zu Beginn einer neuen Aufgabe durchführt.

Darüber hinaus ist es aus der US 2012/0116588 A1 bekannt, einen Andockpfad zum Andocken eines Roboters an einer Basisstation zu definieren, wobei innerhalb eines Rangierbereichs des Roboters vor der Basisstation ein Wendepunkt für eine Richtungsänderung vorgegeben ist, an welchem der Roboter eine letzte Richtungsänderung durchführt und dann in gerader Linie an der Basisstation andockt.

### Zusammenfassung der Erfindung

Ausgehend von dem vorgenannten Stand der Technik ist es Aufgabe der Erfindung, ein Hindernis in einem Rangierbereich einer Basisstation frühzeitig zu erkennen und ein ordnungsgemäßes Andocken eines Servicegerätes an der Basisstation sicherzustellen.

Zur Lösung der vorgenannten Aufgabe schlägt die Erfindung vor, dass innerhalb des Rangierbereichs ein Wendepunkt für eine Richtungsänderung vorgegeben ist, an welchem Wendepunkt das Servicegerät während seiner Fortbewegung zu der Basisstation unabhängig von dem übrigen Verlauf der Fortbewegung spätestens eine letzte Richtungsänderung durchführen kann, bevor es sich in gerader Linie zu der Basisstation fortbewegt, wobei der Rangierbereich zeitlich vor einem Startzeitpunkt eines Rangiervorgangs zum Annähern, Wenden und/oder Andocken des Servicegerätes an die Basisstation auf die Anwesenheit eines Hindernisses überwacht wird, wobei die Überwachung fortlaufend während einer Fortbewegung und/oder Servicetätigkeit des Servicegerätes innerhalb der Umgebung erfolgt, oder wobei die Überprüfung durch ein Ende eines Servicebetriebs des Servicegerätes ausgelöst wird, nämlich bei Ende einer Reinigungstätigkeit des Servicegerätes und/oder Beenden einer Fortbewegung des Servicegerätes und/oder bei Unterschreiten einer kritischen Schwelle eines Ladezustands eines Akkumulators des Servicegerätes, der eine Unterbrechung des Servicebetriebes und ein Aufladen des Akkumulators erfordert und/oder bei Empfang einer Anweisung zum Abbruch eines Reinigungsvorgangs des Servicegerätes von einem Nutzer des Servicegerätes.

Durch die Erfindung wird erreicht, dass das autonome Servicegerät während einer selbsttätigen Fortbewegung frühzeitig Kenntnis über die Anwesenheit eines Hindernisses innerhalb eines vor einer Basisstation befindlichen Rangierbereiches erhält. Die Information über die Anwesenheit eines Hindernisses kann dann genutzt werden, um eine Navigation zu einer Basisstation zu ändern. Die Detektionseinrichtung ist dabei ausgebildet, zumindest einen Teilbereich der Umgebung des Servicegerätes zu detektieren, insbesondere auch eine Position einer oder mehrerer Basisstationen innerhalb der Umgebung. Sobald die Position der mindestens einen Basisstation bekannt ist, kann der Rangierbereich der mindestens einen Basisstation überwacht werden. Sowohl die Position der Basisstation als auch der Rangierbereich und/oder ein Wendepunkt, an welchem das Servicegerät vor der Basisstation wendet, d.h. seine Richtung ändert, können beispielsweise durch XY-Koordinaten und/oder einen Aufstellwinkel der Basisstation relativ zu Raumbegrenzungen innerhalb der Umgebung definiert werden. Die Richtungsänderung kann ein Wenden bis zu 180 Grad umfassen, so dass sich das Servicegerät beispielsweise mit seinem Heckbereich der Basisstation nähert. Erfindungsgemäß ist innerhalb des Rangierbereichs ein Wendepunkt für eine Richtungsänderung definiert. Der Rangierbereich kann nicht nur einen einzigen Wendepunkt, sondern auch mehrere Wendepunkte für eine Richtungsänderung vorgeben. Der Wendepunkt beziehungsweise die Wendepunkte definieren diejenige Position innerhalb des Rangierbereichs, an welcher das Servicegerät auf seinem Fortbewegungspfad zu der Basisstation spätestens eine notwendige Richtungsänderung vorzunehmen hat, bevor es sich in gerader Linie zu der Basisstation fortbewegt. Zwischen dem Wendepunkt und der Basisstation ist somit eine gerade Linie für die Fortbewegung des Servicegerätes vorgegeben, so dass das Servicegerät nach Passieren des Wendepunktes ein gerichtetes Anfahren an die Basisstation, gegebenenfalls unter Zulassen eines definierten Winkelbereiches, unternimmt. Zum Wendepunkt ist sowohl für kleinere Richtungsänderungen von wenigen Grad, als auch für Wendemanöver um 180 Grad definiert. Insofern gibt es für Servicegeräte, die die Basisstation mit einem Frontbereich anfahren, sowie auch für Servicegeräte, die rückwärts an die Basisstation andocken, eine bestimmte Position innerhalb des Rangierbereiches, nämlich den Wendepunkt, an welchem das Servicegerät eine letzte Fortbewegungskorrektur ausführt und dann ohne weitere Richtungsänderung in gerader Linie zu der Basisstation fährt. Die an dem Wendepunkt durchgeführte Richtungsänderung kann Änderungen bis hin zu einer vollständigen Umkehr der Bewegungsrichtung beinhalten. Die Größe sowie Position des Rangierbereiches wird vorzugsweise durch die Position und den Aufstellwinkel der Basisstation definiert. Bei der Überwachung des Rangierbereiches werden die Position der Basisstation sowie das Vorhandensein eines Hindernisses in dem Rangierbereich für einen möglichen Andockvorgang des Servicegerätes detektiert. Vorzugsweise kann die Überwachung fortlaufend oder in bestimmten Zeitabständen während einer Fortbewegung und/oder Servicetätigkeit des Servicegerätes innerhalb der Umgebung erfolgen. Insbesondere so frühzeitig, dass das Servicegerät noch nicht mit einem Annäherungs- bzw. Andockvorgang für ein Andocken an die Basisstation begonnen hat. Im Einzelnen erfolgt der Ablauf des erfindungsgemäßen Verfahrens so, dass die Detektionseinrichtung zunächst das Vorhandensein einer Basisstation innerhalb der Umgebung detektiert, und dass anschließend die Position der Basisstation in der Umgebung bestimmt wird, insbesondere definiert durch XY-Koordinaten und/oder einen Aufstellwinkel der Basisstation innerhalb der Umgebung. Weiter beinhaltet das Verfahren, dass ein Modell einer Annäherungs-, Wende- bzw. Andockbewegung des Servicegerätes ausgehend von einer aktuellen Position des Servicegerätes in die Umgebungskarte gelegt wird, wobei insbesondere der Rangierbereich und/oder der Wendepunkt des Servicegerätes berücksichtigt wird. Anschließend wird der Rangierbereich überwacht, insbesondere in Bezug auf eine potenzielle Kollision mit einem Hindernis, wobei die Überwachung fortlaufend oder situationsbedingt vor dem Start eines Andockwunsches des Servicegerätes erfolgt. Das Erstellen der Umgebungskarte sowie auch das Eintragen der Basisstation und des Rangierbereiches in die Umgebungskarte kann innerhalb des Servicegerätes selbst oder auch ausgelagert in der Basisstation oder einem externen Gerät erfolgen, welches einen entsprechenden Speicher und eine dafür geeignete Rechenvorrichtung aufweist.

Alternativ kann vorgesehen sein, dass der Rangierbereich zeitlich vor einem Startzeitpunkt eines Rangiervorgangs zum Annähern, Wenden und/oder Andocken des Servicegerätes an die Basisstation überwacht wird. Insbesondere kann die Überwachung des Rangierbereiches bei Beenden einer Fortbewegung des Servicegerätes und/oder bei Unterschreiten einer kritischen Schwelle eines Ladezustands eines Akkumulators des Servicegerätes und/oder bei Empfang einer Anweisung von einem Nutzer des Servicegerätes erfolgen. Grundsätzlich kann die Überwachung des Rangierbereiches erfolgen, sobald die Position der Basisstation innerhalb der Umgebung bekannt ist. Das Servicegerät bzw. dessen Detektionseinrichtung oder auch die Detektionseinrichtung der Basisstation kann den Rangierbereich fortlaufend überwachen oder, wie vorgeschlagen, speziell vor dem Starten eines Annäherungs- und/oder Andockvorgangs des Servicegerätes an der Basisstation, so dass frühzeitig eine Konfliktsituation für den Navigationsvorgang des Servicegerätes erkannt werden kann und der Nutzer noch rechtzeitig eingreifen kann, um das Hindernis zu entfernen, bevor das Servicegerät ungewünscht stoppt. Wie vorgeschlagen, ist eine einmalige Überprüfung des Rangierbereiches auf Hindernisse denkbar, die beispielsweise unmittelbar vor einem Andocken stattfinden kann. Die Überprüfung wird dabei ausgelöst durch ein Ende eines Servicebetriebes, beispielsweise das Ende einer Reinigungstätigkeit des Servicegerätes, dem Erreichen einer Schwelle für den Ladezustand des Akkumulators des Servicegerätes, der eine Unterbrechung des Servicebetriebes und ein Aufladen des Akkumulators erfordert und/oder ein manuelles Kommando eines Nutzers, beispielsweise ein Kommando zum Abbruch eines Reinigungsvorgangs des Servicegerätes.

Des Weiteren wird vorgeschlagen, dass die Information über die räumliche Position der Basisstation mittels einer Detektionseinrichtung des Servicegerätes detektiert wird. Bei dieser Ausgestaltung detektiert das Servicegerät selbst, ob Hindernisse in dem Rangierbereich der Basisstation vorhanden sind. Die Detektionseinrichtung des Servicegerätes kann insbesondere eine Bilderfassungseinrichtung, wie beispielsweise eine Kamera und/oder ein CCD-Chip oder CMOS-Chip sein. Des Weiteren kann das Servicegerät eine Recheneinrichtung aufweisen, die die von der Detektionseinrichtung aufgenommenen Bilder dahingehend auswertet, ob sich in der Umgebung eine Basisstation befindet. Sodann kann die Position der Basisstation anhand eines Bildvergleiches ermittelt werden.

Des Weiteren kann vorgesehen sein, dass die Position der Basisstation ermittelt wird, während das Servicegerät mit der Basisstation verbunden ist, wobei die Position insbesondere anhand eines Standortes des Servicegerätes zu einem Startzeitpunkt einer an der Basisstation startenden Fortbewegung des Servicegerätes bestimmt wird. Gemäß dieser Ausgestaltung wird der Startpunkt eines Reinigungsvorgangs des Servicegerätes bestimmt, während sich das Servicegerät an der Basisstation befindet. Eine Detektionseinrichtung des Servicegerätes erkennt, dass sich das Servicegerät aktuell an der Basisstation befindet und definiert seine aktuelle Position innerhalb der Umgebung als räumliche Position der Basisstation, ggf. korrigiert um einen Faktor, welcher ein Maß für die relative Position des Servicegerätes zu der Basisstation während des andockten Zustands angibt.

Des Weiteren kann vorgesehen sein, dass eine Detektionseinrichtung des Servicegerätes die Basisstation anhand eines an der Basisstation angeordneten Codes erkennt, wobei der Code eine Information über die Basisstation aufweist, und wobei die Detektionseinrichtung insbesondere eine den Code optisch detektierende Laserscaneinrichtung oder Bilderfassungseinrichtung ist. Zu diesem Zweck weist die Basisstation einen Code, insbesondere einen optischen Code, auf. Dieser Code kann beispielsweise ein QR-Code, ein Barcode oder ein sonstiger bildlicher Code sein, welcher mittels der Detektionseinrichtung des Servicegerätes ausgelesen und erkannt werden kann. Der Inhalt des Codes betrifft eine oder mehrere Informationen der Basisstation, beispielsweise die Information, dass es sich um eine Basisstation handelt und/oder eine Information über die Art der Basisstation und gegebenenfalls auch Informationen über den aktuellen Aufstellwinkel und/oder die aktuelle Position der Basisstation innerhalb der Umgebung.

Alternativ kann vorgesehen sein, dass ein Nutzer die Information über die räumliche Position der Basisstation an das Servicegerät übermittelt. Dabei kann der Nutzer die Information insbesondere manuell mittels eines eine Kommunikationsverbindung zu dem Servicegerät aufweisenden externen Endgerätes an das Servicegerät übermitteln. In einer besonders einfachen Ausführung ist es möglich, dass der Nutzer die Information über eine Eingabeschnittstelle, beispielsweise eine Tastatur oder ein Touchscreen, des Servicegerätes direkt in das Servicegerät eingibt. Des Weiteren kann hierzu auch ein externes Endgerät des Nutzers verwendet werden, beispielsweise ein Mobiltelefon, ein Tablet-Computer, ein Laptop, ein PC und dergleichen Das externe Endgerät kann vorzugsweise drahtlos mit dem Servicegerät kommunizieren, beispielsweise per WLAN, Bluetooth, ZigBee oder dergleichen. Jedoch ist auch eine drahtgebundene Kommunikation möglich.

Es wird vorgeschlagen, dass der Nutzer die Position der Basisstation in eine auf einem Display des externen Endgerätes dargestellte Umgebungskarte einträgt. Auf dem externen Endgerät des Nutzers ist eine Applikation installiert, welche die Umgebungskarte anzeigt und einem Nutzer eine Änderung und/oder Ergänzung der Umgebungskarte erlaubt, insbesondere dahingehend, dass der Nutzer die Position der Basisstation über eine Tastatur, beispielsweise in Form von X-, Y-Koordinaten, oder direkt über ein die Umgebungskarte darstellendes Touchscreen, einträgt.

Des Weiteren wird vorgeschlagen, dass der Rangierbereich in Bezug auf ein darin vorhandenes Hindernis mittels der Detektionseinrichtung eines Servicegerätes und/oder mittels einer Detektionseinrichtung der Basisstation überwacht wird. Einerseits kann somit die Detektionseinrichtung des Servicegerätes selbst eine Detektion von Hindernissen vornehmen, sowie andererseits auch alternativ oder zusätzlich eine Detektionseinrichtung der Basisstation, welche ebenfalls vorzugsweise eine Bilderfassungseinrichtung ist. Besonders vorteilhaft ist dabei, dass die Detektionseinrichtung der Basisstation unmittelbar und permanent auf den Rangierbereich vor der Basisstation gerichtet werden kann. Die von der Detektionseinrichtung der Basisstation aufgenommenen Detektionsergebnisse können dann dem Servicegerät zur Verfügung gestellt werden. Das Servicegerät kann diese Detektionsergebnisse weiterverarbeiten und insbesondere auch in die Umgebungskarte eintragen bzw. zur Information eines Nutzers über die Anwesenheit eines Hindernisses verwenden.

Insbesondere wird vorgeschlagen, dass bei Detektion eines Hindernisses in dem Rangierbereich einer Basisstation ermittelt wird, ob andere Basisstationen in der Umgebung zur Verfügung stehen, an welche das Servicegerät andocken kann. Des Weiteren kann vorgesehen sein, dass bei Detektion eines Hindernisses in dem Rangierbereich der Basisstation eine akustische und/oder optische Information über das Hindernis an einen Nutzer des Servicegerätes übermittelt wird, insbesondere an ein externes Endgerät des Nutzers. Im Falle der Detektion eines Hindernisses können unterschiedliche Verfahrensweisen des Servicegerätes initiiert werden, beispielsweise kann als Reaktion auf eine Konfliktsituation eine Information an den Nutzer des Servicegerätes übermittelt werden, z.B. mittels einer auf einem externen Endgerät installierten Applikation, indem ein Ausschnitt der Umgebungskarte mit der Position eines Hindernisses und/oder ein Bild des Hindernisses, welches von einer Detektionseinrichtung des Servicegerätes oder der Basisstation aufgenommen wurde, angezeigt wird. Des Weiteren kann ein akustisches und/oder optisches Signal an den Nutzer übermittelt werden, mit dem Inhalt, dass das Hindernis aus dem Rangierbereich entfernt werden sollte. Der Hinweis kann beispielsweise schriftlich auf einem Display des externen Endgerätes des Nutzers dargestellt werden, über einen Lautsprecher des externen Endgerätes, der Basisstation oder auch des Servicegerätes ausgegeben werden oder dergleichen. Des Weiteren kann als Reaktion auf eine detektierte Konfliktsituation zunächst gewartet und überprüft werden, ob sich das Hindernis wieder aus dem Rangierbereich entfernt. Dies kann beispielsweise der Fall sein, wenn der Nutzer das Hindernis manuell entfernt oder das Hindernis beispielsweise ein Mensch oder ein Haustier war, welcher beziehungsweise welches sich in dem Rangierbereich der Basisstation aufgehalten hat. Falls letzteres der Fall ist, wird eine erneute Information an den Nutzer ausgegeben, mit dem Inhalt, dass sich die Konfliktsituation aufgelöst hat. Als weitere Möglichkeit kann vorgesehen sein, dass eine Recheneinheit des Servicegerätes, der Basisstation oder auch eines externen Endgerätes überprüft, ob mehrere Basisstationen in der Umgebung des Servicegerätes vorhanden sind, wobei bei der tatsächlichen Anwesenheit mehrerer Basisstationen detektiert werden kann, welche Basisstation dem Servicegerät am nächsten liegt und einen freien Rangierbereich ohne dort vorhandene Hindernisse zur Verfügung stellt, so dass das Servicegerät dort ohne eine Kollision andocken könnte.

Schließlich wird vorgeschlagen, dass anhand der Umgebungskarte und darin gespeicherter Hindernisse eine optimale räumliche Position für eine Basisstation ermittelt wird, wobei eine Information über die optimale räumliche Position an einen Nutzer des Servicegerätes übermittelt wird. Durch die Analyse historischer Umgebungskarten sowie gespeicherter Konfliktsituationen innerhalb unterschiedlicher Bereiche der Umgebung können einem Nutzer Empfehlungen für einen geeigneten Aufstellort der Basisstation gegeben werden. Dazu können beispielsweise die Kartendaten mehrerer aufeinanderfolgender Serviceläufe, beispielsweise Reinigungsfahrten, des Servicegerätes analysiert werden, dahingehend, ob an ähnlichen Stellen des Raumes ebenfalls Kollisionen mit Hindernissen auftreten bzw. aufgetreten sind. Die Mitteilung über die optimale räumliche Position kann einem Nutzer beispielsweise durch das Servicegerät selbst, durch eine Basisstation oder auch ein externes Endgerät des Nutzers übermittelt werden.

Insgesamt erhält der Nutzer durch die Erfindung eine frühzeitige Information über eine mögliche Kollision mit Hindernissen beim Andockvorgang an eine Basisstation. Bei fortlaufender Überwachung der Rangierbereiche einer oder mehrerer Basisstationen kann der Nutzer frühzeitig eingreifen, wodurch eine vollständige Entladung eines Akkumulators verhindert wird und ein Betrieb nach dem Andocken und Aufladen an der Basisstation ohne weiteres Eingreifen des Nutzers fortgesetzt werden kann.

### Kurze Beschreibung der Zeichnungen

Im Folgenden wird die Erfindung anhand von Ausführungsbeispielen näher erläutert. Es zeigen:
- Fig. 1: eine Umgebung mit einem an einer Basisstation angedockten Servicegerät,
- Fig. 2: einen Rangierbereich der Basisstation mit einem Servicegerät vor Befahren des Rangierbereiches,
- Fig. 3: die Situation gemäß Figur 2 während des Wendens des Servicegerätes innerhalb des Rangierbereiches,
- Fig. 4: die Situation gemäß den Figuren 2 und 3 bei einem angedockten Zustand des Servicegerätes an der Basisstation,
- Fig. 5: eine Umgebungskarte der Umgebung,
- Fig. 6: einen Teilbereich der Umgebung mit einem in dem Rangierbereich der Basisstation befindlichen Hindernis,
- Fig. 7: ein externes Endgerät, auf welchem eine Umgebungskarte dargestellt ist,
- Fig. 8: eine Umgebung mit einem Servicegerät und einer Basisstation gemäß einer zweiten Ausführungsform.

### Beschreibung der Ausführungsformen

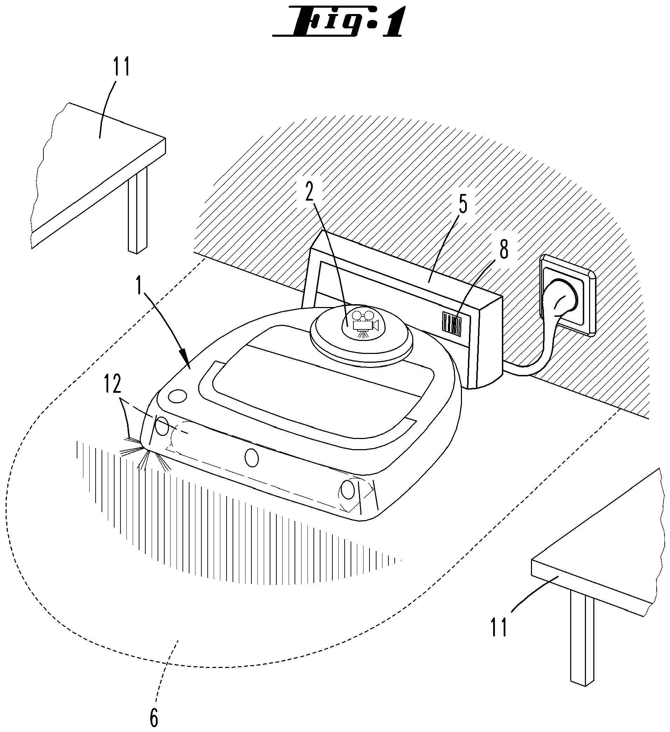

Figur 1 zeigt einen Teilbereich einer Umgebung mit einer Basisstation 5 und einem daran angedockten Servicegerät 1. Das Servicegerät 1 ist hier beispielsweise ein sich selbsttätig fortbewegender Reinigungsroboter. In der Umgebung befinden sich des Weiteren eine Vielzahl von Hindernissen 11, hier beispielsweise Möbelstücke. Das Servicegerät 1 weist ein Gehäuse auf, an welchem unterseitig, einer zu reinigenden Fläche zugewandt, elektromotorisch angetriebene Räder (nicht dargestellt) sowie ein über die Unterkante eines Gehäusebodens hinausragendes, gleichfalls elektromotorisch angetriebenes Reinigungselement 12 angeordnet sind. Das Reinigungselement 12 ist hier beispielsweise eine rotierende Seitenbürste des Servicegerätes 1. Des Weiteren können weitere Reinigungselemente 12 nicht sichtbar unterhalb des Gehäuses des Servicegerätes 1 angeordnet sein, beispielsweise eine rotierende Borstenwalze oder dergleichen. Des Weiteren weist das Servicegerät 1 im Bereich des Reinigungselementes 12 eine nicht weiter dargestellte Saugmundöffnung auf, über welche mittels einer Motor-Gebläse-Einheit mit Sauggut beaufschlagte Luft in das Servicegerät 1 eingesaugt werden kann. Für die Elektroversorgung der einzelnen Elektrokomponenten des Servicegerätes 1, beispielsweise für den Antrieb der Räder und der Reinigungselemente 12, sowie darüber hinaus weiter vorgesehene Elektronik, weist das Servicegerät 1 einen nicht dargestellten, wieder aufladbaren Akkumulator auf.

Das Servicegerät 1 ist des Weiteren mit einer Detektionseinrichtung 2 ausgestattet, welche einerseits eine Bilderfassungseinrichtung, hier eine Kamera, aufweist, und andererseits eine innerhalb des Gehäuses des Servicegerätes 1 angeordnete Triangulationsmesseinrichtung, welche Abstände zu den Hindernissen 11 innerhalb der Umgebung des Servicegerätes 1 messen kann. Die Triangulationsmesseinrichtung weist beispielsweise im Einzelnen eine Laserdiode auf, deren emittierter Lichtstrahl über eine Umlenkeinrichtung aus dem Servicegerät 1 herausgeführt und um eine in der gezeigten Orientierung des Servicegerätes 1 senkrechte Drehachse rotierbar ist, insbesondere mit einem Messwinkel von 360°. Dadurch ist eine Rundum-Abstandsmessung möglich.

Mit Hilfe der Detektionseinrichtung 2 kann eine Umgebung des Servicegerätes vermessen und überwacht werden. Insbesondere kann das Servicegerät 1 dadurch unter Vermeidung einer Kollision mit Hindernissen 11 in der Umgebung bewegt werden. Die mittels der Detektionseinrichtung 2 aufgenommenen Detektionsergebnisse, welche Abstände zu Hindernissen 11 in der Umgebung betreffen, werden zur Erstellung einer Umgebungskarte 4 der Umgebung genutzt.

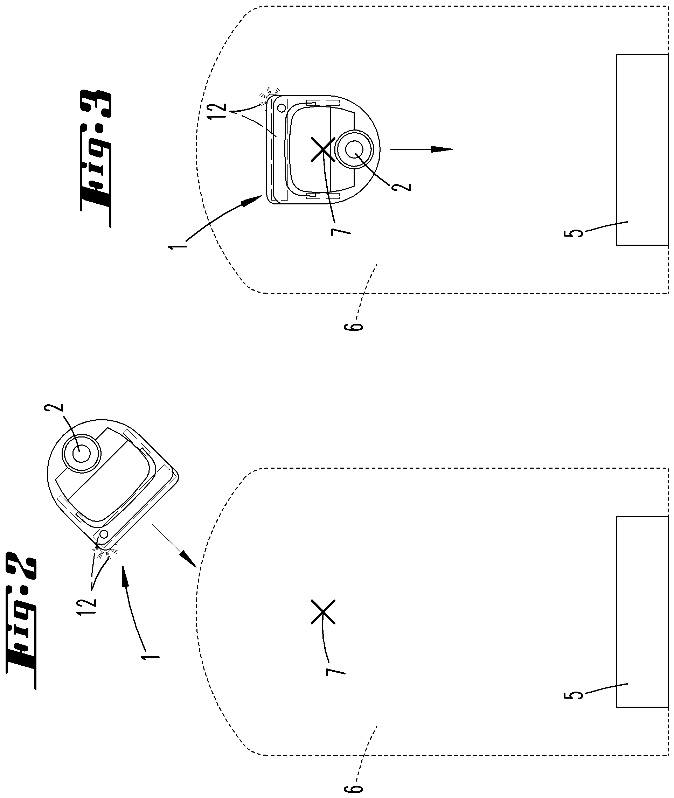

Vor der Basisstation 5 befindet sich ein Rangierbereich 6, in welchem das Servicegerät 1 sich der Basisstation 5 für einen Andockvorgang annähert. Innerhalb des Rangierbereiches 6 wendet das Servicegerät 1, so dass sich das Servicegerät 1 hier beispielsweise mit seinem Heckbereich an die Basisstation 5 annähert, um dort beispielsweise einen Akkumulator aufzuladen. Um in die in der Figur dargestellte Andockposition zu gelangen, wendet das Servicegerät 1 an einem in dem Rangierbereich 6 definierten Wendepunkt 7 (siehe Figuren 2 bis 4), welcher in einer vordefinierten Entfernung zu der Basisstation 5 liegt. Dadurch kann das Servicegerät 1 nach dem Wenden durch Rückwärtsfahren an der Basisstation 5 andocken. Ebenfalls können alternative Ausführungen auch vorsehen, dass das Sauggerät 1 seitwärts oder vorwärts an der Basisstation 5 andockt, so dass sich der Winkel der Richtungsänderung am Wendepunkt 7 entsprechend unterscheidet.

Wie in Figur 1 dargestellt, befindet sich außen an der Basisstation 5 des Weiteren ein Code 8, welcher Informationen über die Basisstation 5 enthält. Dieser Code 8 kann von der Detektionseinrichtung 2 des Servicegerätes 1 detektiert und ausgelesen werden. Der Code 8 beinhaltet beispielsweise Informationen darüber, dass es sich bei der Basisstation 5 um eine für das Servicegerät 1 geeignete Basisstation 5 handelt.

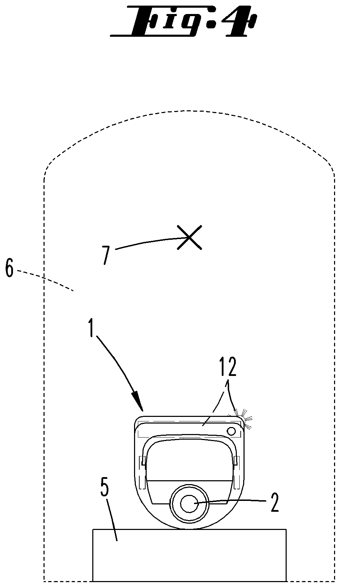

Die Figuren 2 bis 4 zeigen im zeitlichen Verlauf einen Andockvorgang des Servicegerätes 1 zum Andocken an die Basisstation 5. Figur 2 zeigt dabei einen Annäherungsvorgang des Servicegerätes 1 an den Rangierbereich 6 der Basisstation 5. Dabei befindet sich das Servicegerät 1 noch außerhalb des Rangierbereiches 6 und steuert auf den innerhalb des Rangierbereiches 6 definierten Wendepunkt 7 zu. Die Position des Rangierbereiches 6 sowie auch der darin befindliche Wendepunkt 7 werden anhand der bekannten Position und Orientierung der Basisstation 5 innerhalb der Umgebungskarte 4 berechnet. Ein Modell eines Verfahrweges des Servicegerätes 1 zum Andocken an der Basisstation 5 wird in die Umgebungskarte 4 gelegt, wobei gleichzeitig der Wendepunkt 7 für das Servicegerät 1 berechnet wird, an welchem das Servicegerät 1 vorzugsweise dreht, um auf kürzestem und/oder einfachstem Wege vorwärts, seitwärts oder auch - wie hier dargestellt - rückwärts an die Basisstation 5 andocken zu können. Selbstverständlich ist es auch möglich, dass ein Servicegerät 1 nicht wenden muss, um an die Basisstation 5 anzudocken. In diesem Fall entfällt ein Wendepunkt 7 innerhalb des Rangierbereiches 6. Die Position der Basisstation 5 innerhalb der Umgebung wurde zuvor beispielsweise bei dem Start einer Servicefahrt des Servicegerätes 1 ausgehend von der Basisstation 5 ermittelt. Des Weiteren ist es jedoch auch möglich, dass ein Nutzer des Servicegerätes 1 die Position der Basisstation 5 zuvor manuell an das Servicegerät 1 übermittelt hat, insbesondere manuell in die Umgebungskarte 4 eingetragen hat. Somit hat das Servicegerät 1 Kenntnis über sowohl eine aktuelle Position des Servicegerätes 1 innerhalb der Umgebung, als auch über die Position der Basisstation 5 und deren Rangierbereich 6. Der Wendepunkt 7 markiert dabei denjenigen Punkt innerhalb des Rangierbereichs 6, an welchem das Sauggerät 1 während seiner Fortbewegung zu der Basisstation 5 spätestens eine Richtungsänderung durchzuführen hat, um dann in gerader Linie auf die Basisstation 5 zuzusteuern. Figur 3 zeigt eine Situation, in welcher sich das Servicegerät 1 bereits innerhalb des Rangierbereiches 6 befindet, nämlich über dem definierten Wendepunkt 7. Das Servicegerät 1 hat bereits gewendet und fährt nun - ausgehend von dem Wendepunkt 7 - rückwärts an die Basisstation 5. Schließlich wird die in Figur 4 dargestellte Andockstellung des Servicegerätes 1 erreicht.

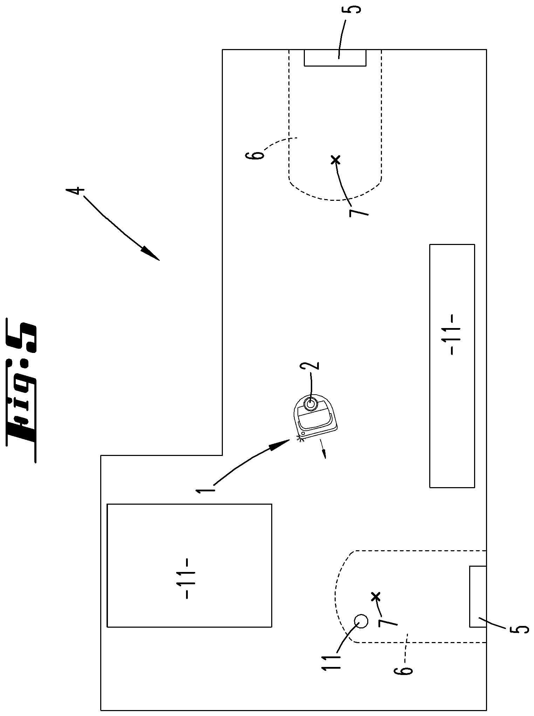

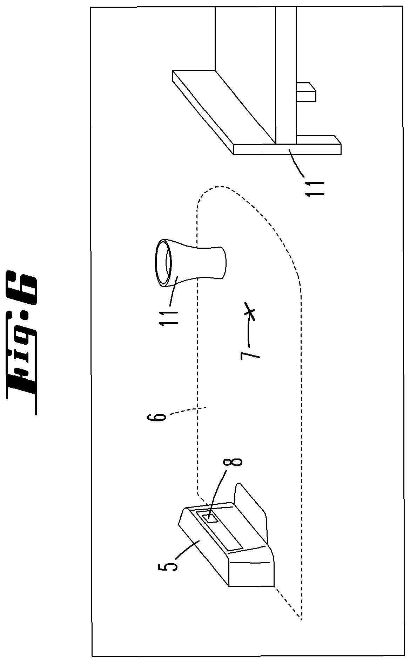

Figur 5 zeigt eine die Umgebung des Servicegerätes 1 darstellende Umgebungskarte 4. In der Umgebungskarte 4 sind sowohl die Hindernisse 11 als auch mehrere Basisstationen 5 gespeichert. Des Weiteren beinhaltet die Umgebungskarte 4 auch die Position des Servicegerätes 1. Zu den beiden Basisstationen 5 sind jeweils auch deren Rangierbereiche 6 und die zugehörigen Wendepunkte 7 gespeichert. Des Weiteren ist in der Umgebungskarte 4 vor einer der beiden Basisstationen 5 ein Hindernis 11 innerhalb des zu der Basisstation 5 gehörenden Rangierbereiches 6 angeordnet. Bei dem Hindernis 11 handelt es sich hier beispielsweise um eine Vase, die ein Nutzer versehentlich innerhalb des Rangierbereiches 6 platziert hat. Ein Detailausschnitt der Situation ist ebenfalls in Figur 6 dargestellt.

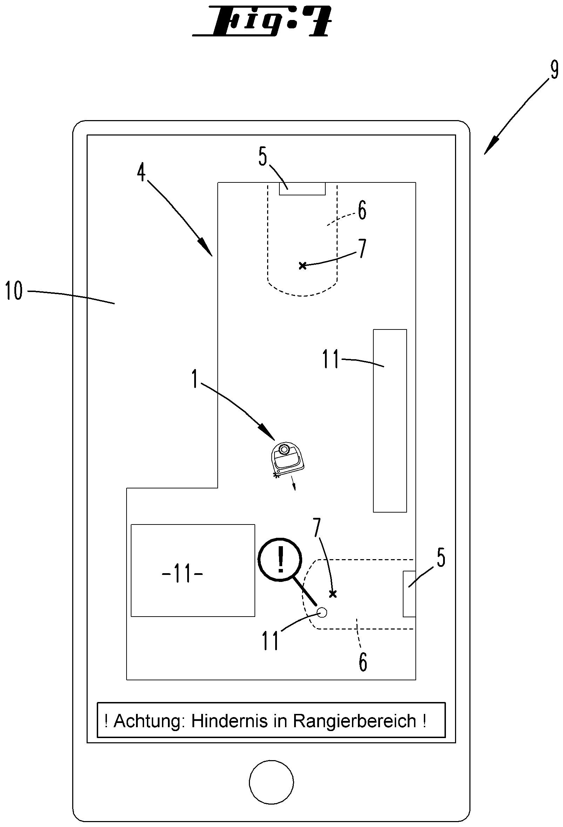

Die Detektionseinrichtung 2 des Servicegerätes 1 überwacht den Rangierbereich 6 während einer Reinigungstätigkeit innerhalb der Umgebung fortlaufend und erkennt eine Veränderung innerhalb des Rangierbereiches 6 mittels der Detektionseinrichtung 2, nämlich entweder mittels der Bilderfassungseinrichtung bei einem Vergleich mit Referenzbildern ohne Hindernis 11 oder mittels der Abstandsmesseinrichtung. Sobald die Detektionseinrichtung 2 ein Hindernis 11 in dem Rangierbereich 6 feststellt, gibt das Servicegerät 1 eine Information an einen Nutzer des Servicegerätes 1 aus. Die Ausgabe der Information kann entweder akustisch durch eine Ansage erfolgen derart, dass der Nutzer ein Hindernis 11 aus dem Rangierbereich 6 der Basisstation 5 entfernen soll, oder auch in der Form einer optischen Information, welche insbesondere auf einem Display 10 eines externen Endgerätes 9 angezeigt wird. Eine solche optische Anzeige der Information zeigt beispielsweise Figur 7. Darin ist ein externes Endgerät 9, hier ein Mobiltelefon, dargestellt, auf dessen Display 10 die Umgebungskarte 4 der Umgebung angezeigt ist. Die Umgebungskarte 4 entspricht hier der in Figur 5 dargestellten Umgebungskarte. Diese ist zusätzlich um die Informationen "Achtung. Hindernis in Rangierbereich." ergänzt. Des Weiteren befindet sich ein optischer Marker, nämlich ein Ausrufungszeichen innerhalb der Umgebungskarte 4, zugeordnet zu dem Rangierbereich 6 der betreffenden Basisstation 5, so dass der Nutzer unmittelbar erkennen kann, wo sich das Hindernis 11 befindet. Daraufhin kann der Nutzer zu dem Rangierbereich 6 innerhalb der Umgebung gehen und das Hindernis 11 entfernen.

Alternativ zu einer kontinuierlichen Überwachung der Rangierbereiche 6 der Basisstationen 5 kann es vorgesehen sein, dass das Servicegerät 1 nur situativ eine Überprüfung der Rangierbereiche 6 vornimmt, nämlich dann, wenn in Kürze oder aktuell ein Anfahren des Servicegerätes 1 an eine Basisstation 5 geplant ist. Dies kann beispielsweise zum Ende einer Servicefahrt des Servicegerätes 1 der Fall sein, wenn der Akkumulator des Servicegerätes 1 nur noch eine geringe Ladespannung aufweist oder wenn der Nutzer manuell einen Steuerbefehl zum Andocken an eine Basisstation 5 übermittelt. Sofern die Detektionseinrichtung 2 des Servicegerätes 1, wie in dem dargestellten Beispiel, die Anwesenheit eines Hindernisses 11 innerhalb des Rangierbereiches 6 detektiert, kann die Information über das Hindernis 11 an den Nutzer übermittelt werden. Die Information kann dabei einerseits die dargestellte Umgebungskarte 4 aufweisen, jedoch zusätzlich beispielsweise auch ein Bild der Umgebung, welche das Hindernis 11 zeigt. Daraufhin wartet und überprüft das Servicegerät 1 vorzugsweise, ob sich das Hindernis 11 aus dem Rangierbereich 6 entfernt, beispielsweise weil es sich bei dem Hindernis 11 um eine Person oder ein Tier handelt, oder weil der Nutzer das Hindernis 11 manuell entfernt hat. Sollte das Servicegerät 1 feststellen, dass das Hindernis 11 wieder entfernt ist, wird entsprechend ebenfalls eine Information an den Nutzer ausgegeben. Des Weiteren kann es im Falle der Anwesenheit eines Hindernisses 11 innerhalb eines Rangierbereiches 6 einer der Basisstationen 5 vorgesehen sein, dass das Servicegerät 1 überprüft, ob andere Basisstationen 5 innerhalb der Umgebung des Servicegerätes 1 zum Andocken zur Verfügung stehen. Sodann kann das Servicegerät 1 eine alternative Basisstation 5 ansteuern und dort andocken.

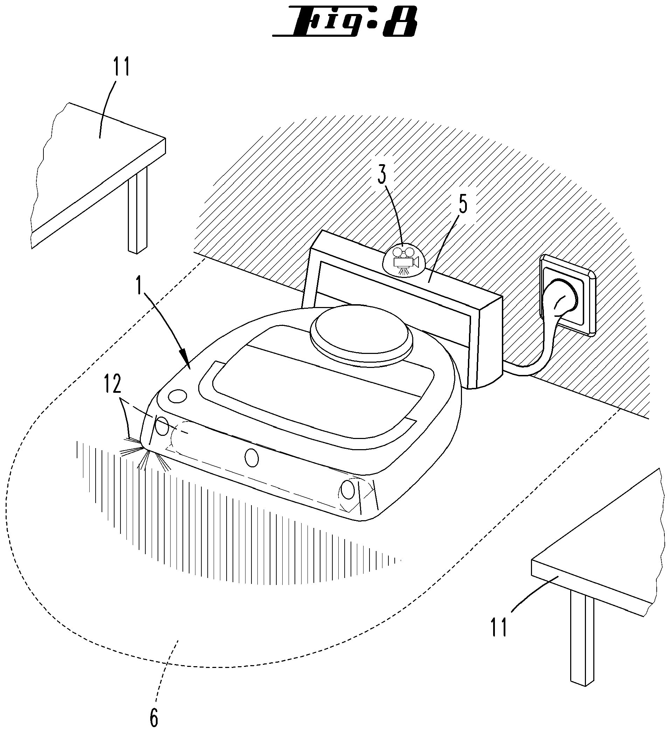

Figur 8 zeigt schließlich eine weitere Ausführungsform der Erfindung, bei welcher die Basisstation 5 eine Detektionseinrichtung 3 aufweist. Diese Detektionseinrichtung 3 ist hier ebenfalls eine Bilderfassungseinrichtung, nämlich eine Kamera. Die Detektionseinrichtung 3 überwacht den Rangierbereich 6 der betreffenden Basisstation 5 in Bezug auf darin vorhandene Hindernisse 11. Sollte die Detektionseinrichtung 3 dieser Basisstation 5 feststellen, dass sich ein Hindernis 11 innerhalb des Rangierbereiches 6 befindet, kann eine entsprechende Mitteilung an einen Nutzer übermittelt werden, so dass dieser das Hindernis 11 aus dem Rangierbereich 6 entfernen kann.

Des Weiteren kann es vorgesehen sein, dass einem Nutzer eine vorteilhafte räumliche Position zum Aufstellen einer Basisstation 5 innerhalb der Umgebung empfohlen wird. Dazu können historische Umgebungskarten analysiert werden und ggf. früher identifizierte Hindernissituationen in bestimmten Teilbereichen der Umgebung ausgewertet werden. Die Empfehlung über den geeigneten Aufstellort für eine oder mehrere Basisstationen 5 kann dem Nutzer wiederum auf einem externen Endgerät 9 angezeigt werden.

### Liste der Bezugszeichen

- 1: Servicegerät
- 2: Detektionseinrichtung
- 3: Detektionseinrichtung
- 4: Umgebungskarte
- 5: Basisstation
- 6: Rangierbereich
- 7: Wendepunkt
- 8: Code
- 9: Externes Endgerät
- 10: Display
- 11: Hindernis
- 12: Reinigungselement

## Patentansprüche

1. Verfahren zum Betrieb eines sich selbsttätig fortbewegenden Servicegerätes (1), wobei eine Detektionseinrichtung (2, 3) Hindernisse (11) innerhalb einer Umgebung detektiert, wobei anhand von Detektionsergebnissen der Detektionseinrichtung (2, 3) eine Umgebungskarte (4) der Umgebung erstellt wird und wobei sich das Servicegerät (1) anhand der Umgebungskarte (4) innerhalb der Umgebung fortbewegt, wobei eine Steuereinrichtung des Servicegerätes (1) eine Information über eine räumliche Position einer Basisstation (5) in der Umgebung erhält, wobei ferner ein Rangierbereich (6) zum Annähern, Wenden und/oder Andocken des Servicegerätes (1) an die Basisstation (5) bestimmt wird, wobei die räumliche Position und der Rangierbereich (6) in der Umgebungskarte (4) gespeichert werden, wobei der Rangierbereich (6) zeitlich vor einem Startzeitpunkt eines Rangiervorgangs zum Annähern, Wenden und/oder Andocken des Servicegerätes an die Basisstation (5) überwacht wird, **dadurch gekennzeichnet, dass** innerhalb des Rangierbereichs (6) ein Wendepunkt (7) für eine Richtungsänderung vorgegeben ist, an welchem Wendepunkt (7) das Servicegerät (1) während seiner Fortbewegung zu der Basisstation (5) unabhängig von dem übrigen Verlauf der Fortbewegung spätestens eine letzte Richtungsänderung durchführen kann, bevor es sich in gerader Linie zu der Basisstation (5) fortbewegt, wobei die Überwachung fortlaufend während einer Fortbewegung und/oder Servicetätigkeit des Servicegerätes (1) innerhalb der Umgebung erfolgt, oder wobei die Überprüfung durch ein Ende eines Servicebetriebs des Servicegerätes (1) ausgelöst wird, nämlich bei Ende einer Reinigungstätigkeit des Servicegerätes (1) und/oder Beenden einer Fortbewegung des Servicegerätes (1) und/oder bei Unterschreiten einer kritischen Schwelle eines Ladezustands eines Akkumulators des Servicegerätes (1), der eine Unterbrechung des Servicebetriebes und ein Aufladen des Ackumulators erfordert und/oder bei Empfang einer Anweisung zum Abbruch eines Reinigungsvorgangs des Servicegerätes (1) von einem Nutzer des Servicegerätes (1).

2. Verfahren nach Anspruch 1, **dadurch gekennzeichnet, dass** die Information über die räumliche Position der Basisstation (5) mittels einer Detektionseinrichtung (2) des Servicegerätes (1) detektiert wird.

3. Verfahren nach Anspruch 2, **dadurch gekennzeichnet, dass** die Position der Basisstation (5) ermittelt wird, während das Servicegerät (1) mit der Basisstation (5) verbunden ist, wobei die Position insbesondere anhand eines Standortes des Servicegerätes (1) zu einem Startzeitpunkt einer an der Basisstation (5) startenden Fortbewegung des Servicegerätes (1) bestimmt wird.

4. Verfahren nach einem der vorhergehenden Ansprüche, **dadurch gekennzeichnet, dass** eine Detektionseinrichtung (2) des Servicegerätes (1) die Basisstation (5) anhand eines an der Basisstation (5) angeordneten Codes (8) erkennt, welcher eine Information über die Basisstation (5) aufweist, wobei die Detektionseinrichtung (2) insbesondere eine den Code optisch detektierende Laserscaneinrichtung oder Bilderfassungseinrichtung ist.

5. Verfahren nach Anspruch 1, **dadurch gekennzeichnet, dass** ein Nutzer die Information über die räumliche Position der Basisstation (5) an das Servicegerät (1) übermittelt, insbesondere manuell mittels eines eine Kommunikationsverbindung zu dem Servicegerät (1) aufweisenden externen Endgerätes (9).

6. Verfahren nach Anspruch 5, **dadurch gekennzeichnet, dass** der Nutzer die Position der Basisstation (5) in eine auf einem Display (10) des externen Endgerätes (9) dargestellte Umgebungskarte (4) einträgt.

7. Verfahren nach einem der vorhergehenden Ansprüche, **dadurch gekennzeichnet, dass** der Rangierbereich (6) in Bezug auf ein darin vorhandenes Hindernis (11) mittels der Detektionseinrichtung (2) eines Servicegerätes (1) und/oder mittels einer Detektionseinrichtung (3) der Basisstation (5) überwacht wird.

8. Verfahren nach einem der vorhergehenden Ansprüche, **dadurch gekennzeichnet, dass** bei Detektion eines Hindernisses (11) in dem Rangierbereich (6) einer Basisstation (5) ermittelt wird, ob andere Basisstationen (5) in der Umgebung zur Verfügung stehen, an welche das Servicegerät (1) andocken kann, und/oder dass bei Detektion eines Hindernisses (11) in dem Rangierbereich (6) der Basisstation (5) eine akustische und/oder optische Information über das Hindernis (11) an einen Nutzer des Servicegerätes (1) übermittelt wird, insbesondere an ein externes Endgerät (9) des Nutzers.

9. Verfahren nach einem der vorhergehenden Ansprüche, **dadurch gekennzeichnet, dass** anhand der Umgebungskarte (4) und darin gespeicherter Hindernisse (11) eine optimale räumliche Position für eine Basisstation (5) ermittelt wird, wobei eine Information über die optimale räumliche Position an einen Nutzer des Servicegerätes (1) übermittelt wird.

## Claims

1. Method for operating a self-propelled service device (1), wherein a detection device (2, 3) detects obstacles (11) within an environment, wherein an environment map (4) of the environment is created on the basis of detection results of the detection device (2, 3) and wherein the service device (1) moves on the basis of the environment map (4) within the environment, wherein a control device of the service device (1) receives information about a spatial position of a base station (5) in the environment, and a manoeuvring area (6) for approaching, turning and/or docking the service device (1) to the base station (5) is also determined, the spatial position and the manoeuvring area (6) being stored in the environment map (4), the manoeuvring area (6) being monitored before a start point of a manoeuvring process for approaching, turning and/or docking the service device to the base station (5), **characterised in that** within the manoeuvring area (6), a turning point (7) for a change of direction is defined, at which turning point (7) the service device (1) during its movement to the base station (5), regardless of the remaining course of the movement, can carry out the last change of direction at the latest before it travels in a straight line to the base station (5), the monitoring being carried out continuously during a movement and/or service activity of the service device (1) within the environment, or the check being triggered by an end of a service operation of the service device (1), namely at the end of a cleaning activity of the service device (1) and/or termination of movement of the service device (1) and/or when a critical level of a charge level of a battery of the service device (1) is undershot, which requires an interruption of the service operation and charging of the battery and/or when an instruction to abort a cleaning process of the service device (1) is received from a user of the service device (1).

2. Method according to claim 1, **characterised in that** the information regarding the spatial position of the base station (5) is detected by means of a detection device (2) of the service device (1).

3. Method according to claim 2, **characterised in that** the position of the base station (5) is determined while the service device (1) is connected to the base station (5), wherein the position is determined in particular on the basis of a location of the service device (1) at a starting time of movement of the service device (1) starting from the base station (5).

4. Method according to one of the preceding claims, **characterised in that** a detection device (2) of the service device (1) recognizes the base station (5) on the basis of a code (8) arranged on the base station (5), which code provides information about the base station (5), the detection device (2) being in particular a laser scanning device or image detection device optically detecting the code.

5. Method according to claim 1, **characterised in that** a user transmits the information regarding the spatial position of the base station (5) to the service device (1), in particular manually by means of an external terminal (9) having a communication link to the service device (1).

6. Method according to claim 5, **characterised in that** the user enters the position of the base station (5) in an environment map (4) shown on a display (10) of the external terminal (9).

7. Method according to one of the preceding claims, **characterised in that** the manoeuvring area (6) is monitored with regard to an obstacle (11) present therein by means of the detection device (2) of a service device (1) and/or by means of a detection device (3) of the base station (5).

8. Method according to one of the preceding claims, **characterised in that** upon detection of an obstacle (11) in the manoeuvring area (6) of a base station (5), it is determined whether other base stations (5) are available in the environment to which the service device (1) can dock and/or **in that** upon detection of an obstacle (11) in the manoeuvring area (6) of the base station (5), an item of acoustic and/or optical information about the obstacle (11) is transmitted to a user of the service device (1), in particular to an external terminal (9) of the user.

9. Method according to one of the preceding claims, **characterised in that** an optimal spatial position for a base station (5) is determined on the basis of the environment map (4) and obstacles (11) stored therein, wherein an item of information regarding the optimal spatial position is transmitted to a user of the service device (1).

## Revendications

1. Procédé pour faire fonctionner un dispositif de service (1) se déplaçant automatiquement, dans lequel un dispositif de détection (2, 3) détecte des obstacles (11) dans un environnement, dans lequel une carte d'environnement (4) de l'environnement est établie sur la base de résultats de détection du dispositif de détection (2, 3) et dans lequel le dispositif de service (1) se déplace dans l'environnement sur la base de la carte d'environnement (4), dans lequel un dispositif de commande du dispositif de service (1) reçoit une information sur une position spatiale d'une station de base (5) dans l'environnement, dans lequel, en outre, une zone de manœuvre (6) est déterminée pour l'approche, la rotation et/ou l'amarrage du dispositif de service (1) à la station de base (5), dans lequel la position spatiale et la zone de manœuvre (6) sont enregistrées dans la carte d'environnement (4), dans lequel la zone de manœuvre (6) est surveillée dans le temps avant un point de démarrage dans le temps d'une procédure de manœuvre pour l'approche, la rotation et/ou l'amarrage du dispositif de service à la station de base (5), **caractérisé en ce qu'**un point de rotation (7) pour un changement de direction est prédéterminé à l'intérieur de la zone de manœuvre (6), point de rotation (7) auquel le dispositif de service (1), pendant son déplacement vers la station de base (5), peut effectuer, indépendamment du reste du déplacement, au plus tard un dernier changement de direction avant de se déplacer en ligne droite vers la station de base (5), dans lequel la surveillance est effectuée en continu pendant un déplacement et/ou une activité de service du dispositif de service (1) dans l'environnement, ou dans lequel la surveillance est déclenchée par une fin d'une opération de service du dispositif de service (1), à savoir à la fin d'une activité de nettoyage du dispositif de service (1) et/ou à la fin d'un déplacement du dispositif de service (1) et/ou lorsqu'un état de charge d'un accumulateur/batterie du dispositif de service (1) devient inférieur à un seuil critique qui nécessite une interruption de l'opération de service et une charge de l'accumulateur/batterie et/ou en cas de réception d'une instruction d'arrêt d'un processus de nettoyage du dispositif de service (1) émanant d'un utilisateur du dispositif de service (1).

2. Procédé selon la revendication 1, **caractérisé en ce que** l'information sur la position spatiale de la station de base (5) est détectée au moyen d'un dispositif de détection (2) du dispositif de service (1).

3. Procédé selon la revendication 2, **caractérisé en ce que** la position de la station de base (5) est déterminée pendant que le dispositif de service (1) est relié à la station de base (5), la position étant déterminée en particulier sur la base d'un emplacement du dispositif de service (1) à un point de départ dans le temps d'un déplacement du dispositif de service (1) qui commence à la station de base (5).

4. Procédé selon l'une des revendications précédentes, **caractérisé en ce qu'**un dispositif de détection (2) du dispositif de service (1) reconnaît la station de base (5) au moyen d'un code (8) agencé au niveau de la station de base (5), lequel code comporte une information sur la station de base (5), le dispositif de détection (2) étant en particulier un dispositif de balayage laser ou un dispositif d'acquisition d'images détectant optiquement le code.

5. Procédé selon la revendication 1, **caractérisé en ce qu'**un utilisateur transmet l'information sur la position spatiale de la station de base (5) au dispositif de service (1), en particulier manuellement au moyen d'un terminal externe (9) ayant une liaison de communication avec le dispositif de service (1).

6. Procédé selon la revendication 5, **caractérisé en ce que** l'utilisateur saisit la position de la station de base (5) dans une carte d'environnement (4) affichée sur un écran (10) du terminal externe (9).

7. Procédé selon l'une des revendications précédentes, **caractérisé en ce que** la zone de manœuvre (6) est surveillée en ce qui concerne un obstacle (11) s'y trouvant au moyen du dispositif de détection (2) d'un dispositif de service (1) et/ou au moyen d'un dispositif de détection (3) de la station de base (5).

8. Procédé selon l'une des revendications précédentes, **caractérisé en ce que**, en cas de détection d'un obstacle (11) dans la zone de manœuvre (6) d'une station de base (5), on détermine si d'autres stations de base (5) sont disponibles dans l'environnement auxquelles le dispositif de service (1) peut s'amarrer, et/ou que en cas de détection d'un obstacle (11) dans la zone de manœuvre (6) de la station de base (5), une information acoustique et/ou optique concernant l'obstacle (11) est transmise à un utilisateur du dispositif de service (1), en particulier à un terminal externe (9) de l'utilisateur.

9. Procédé selon l'une des revendications précédentes, **caractérisé en ce qu'**une position spatiale optimale pour une station de base (5) est déterminée sur la base de la carte d'environnement (4) et des obstacles (11) qui y sont enregistrés, dans lequel une information sur la position spatiale optimale est transmise à un utilisateur du dispositif de service (1).
